# EUROPÄISCHE PATENTANMELDUNG

(11) **EP 2 246 951 A1**
(43) Veröffentlichungstag der Anmeldung: **03.11.2010**
(21) Anmeldenummer: 09305377.5
(22) Anmeldetag: 29.04.2009
(51) Int. Cl.: H02G 5/06, H01B 9/06

(54) **Hochspannungsleitung**

(71) Anmelder: Nexans, 75008 Paris (FR)
(72) Erfinder: Dr.-Ing. Frohne, Christian, 30657, Hannover (DE); Dr.-Ing. Meurer, Dietmar, 31275, Lehrte (DE); Dipl.-Ing. Stemmle, Mark, 30161, Hannover (DE)
(74) Vertreter: Döring, Roger

(57) **Zusammenfassung**

Es wird eine Hochspannungsleitung angegeben, die einen elektrischen Leiter (1) aufweist, um den herum unter Zwischenschaltung einer Abstandshalterung (2) ein Metallrohr (3) angeordnet ist. In dem vom Metallrohr (3) umschlossenen, zwischen demselben und dem Leiter (1) befindlichen Hohlraum ist ein unter Druck stehendes Gas vorhanden ist. Das Metallrohr (3) ist als quer zu seiner Längsrichtung gewelltes Rohr ausgeführt und über dem Metallrohr (3) ist eine in axialer Richtung zugfeste Armierung (5) angebracht.

## Beschreibung

Die Erfindung bezieht sich auf eine Hochspannungsleitung, die einen elektrischen Leiter aufweist, um den herum unter Zwischenschaltung einer Abstandshalterung ein Metallrohr angeordnet ist und bei welcher in dem vom Metallrohr umschlossenen, zwischen demselben und dem Leiter befindlichen Hohlraum ein unter Druck stehendes Gas vorhanden ist (DE-A-2 307 195).

Derartige Hochspannungsleitungen - im folgenden kurz "Leitungen" genannt - werden insbesondere als Ersatz von Freileitungen in Hochspannungsnetzen eingesetzt. Das unter Druck stehende Gas, beispielsweise SF₆, isoliert den spannungsführenden Leiter gegenüber dem Metallrohr, das bei Einsatz der Leitung in einem Gleichstromnetz als elektrischer Rückleiter verwendet werden kann. Es kann aber auch geerdet sein und insbesondere in 3-phasigen Wechselstromnetzen im Normalbetrieb den Ladestrom der Leitungskapazität und im Fehlerfall den Kurzschlußstrom führen.

Bei der bekannten Leitung nach der eingangs erwähnten DE-A-2 307 195 ist der aus Aluminium oder einer Aluminiumlegierung bestehende Leiter in einem glatten, als Kapselung bezeichneten Rohr angeordnet, das ebenfalls aus Aluminium oder einer Aluminiumlegierung bestehen kann. Zwischen Leiter und Rohr sind in axialen Abständen scheibenförmige Abstandshalter angeordnet. Der Hohlraum innerhalb des Rohres ist mit unter Druck stehendem Gas gefüllt. Zum Aufbau eines Hochspannungsnetzes müssen viele Abschnitte einer solchen Leitung miteinander verbunden werden, weil dieselben nur in Längen von etwa 10 m bis 15 m hergestellt und transportiert werden können. Der Aufwand ist entsprechend hoch. Die Leitung kann außerdem nur auf einem ausreichend festen Untergrund verlegt werden.

Der Erfindung liegt die Aufgabe zugrunde, die eingangs geschilderte Leitung so zu gestalten, daß sie einfacher transportiert und verlegt werden kann.

Diese Aufgabe wird gemäß der Erfindung dadurch gelöst,
- daß das Metallrohr als quer zu seiner Längsrichtung gewelltes Rohr ausgeführt ist und
- daß über dem Metallrohr eine in axialer Richtung zugfeste Armierung angebracht ist.

Diese Leitung ist wegen des gewellten Metallrohrs biegbar. Sie kann in großen Längen gefertigt und auf Spulen aufgewickelt werden. Ihr Transport und ihre Verlegung sind dadurch relativ einfach. Die zugfeste Armierung gibt außerdem die Möglichkeit, die Leitung in großer Länge zu verlegen, und zwar auch auf Strecken mit größeren Höhenunterschieden. Die Leitung kann nach ihrer Verlegung - zumindest teilweise - auch ohne festen Untergrund an ihrem Ende beispielsweise aufgehängt werden, ohne daß eine Zerstörung der Leitung zu befürchten ist. Dieser Vorteil macht sich besonders bei der Verlegung der Leitung im Offshore-Bereich zur Spannungsversorgung von Bohrinseln bemerkbar, weil sie dabei mit erheblicher Zugbeanspruchung aus einem Schiff heraus auf dem Meeresboden verlegt wird. Auch das vom Meeresboden bis zur Bohrinsel nach oben geführte Ende der Leitung ist durch die Armierung wirksam mechanisch geschützt.

Ein Ausführungsbeispiel des Erfindungsgegenstandes ist in den Zeichnungen dargestellt.

Es zeigen:
Fig. 1 ein Schnittbild der Leitung nach der Erfindung in schematischer Darstellung.
Fig. 2 einen Schnitt durch Fig. 1 längs der Linie II - II.
Fig. 3 eine Einzelheit aus Fig. 2 in vergrößerter Darstellung.

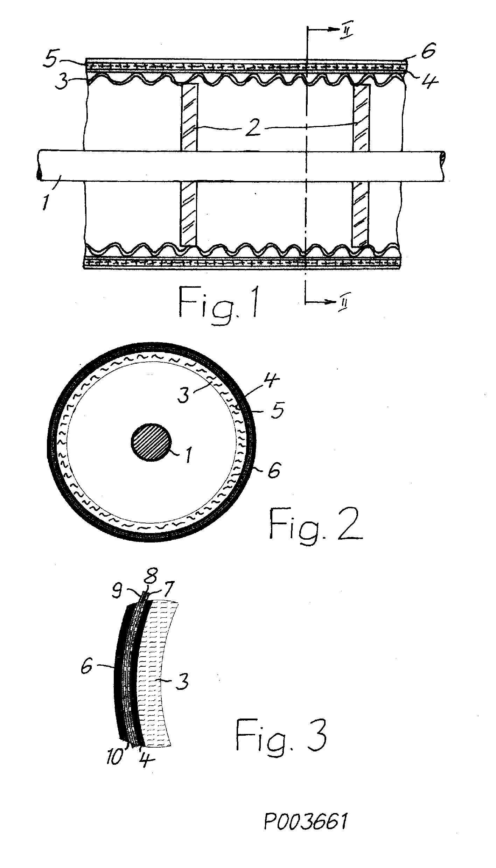

Die Hochspannungsleitung - im folgenden weiter kurz "Leitung" genannt - nach den Fig. 1 und 2 hat einen spannungsführenden Leiter 1 und ein denselben unter Zwischenschaltung einer Abstandshalterung 2 koaxial umgebendes, quer zu seiner Längsrichtung gewelltes Metallrohr 3. Der vom gewellten Metallrohr 3 umgebene Hohlraum ist mit einem unter Druck stehenden Gas gefüllt, vorzugsweise mit SF₆ oder einem SF₆/Stickstoffgemisch. Der Druck kann beispielsweise 7 bar betragen. Das Metallrohr 3 ist in bevorzugter Ausführungsform wendelförmig gewellt. Es kann aber auch ringförmig gewellt sein.

Der Leiter 1 ist vorzugsweise als gut biegbarer Litzenleiter mit einer Vielzahl von miteinander verseilten Einzeldrähten ausgeführt. Er kann mit Vorteil aus Aluminium bzw. einer Aluminiumlegierung oder aus Kupfer bestehen und soll eine möglichst glatte Oberfläche haben. Er kann mit Vorteil als sogenannter Millikenleiter ausgeführt sein, in dem mindestens drei Sektoren miteinander verseilt sind, die jeweils aus miteinander verseilten Einzeldrähten bestehen. Zur Begrenzung des sogenannten Skin-Effekts können die Einzeldrähte gegeneinander isoliert sein. Der Leiter 1 kann aber auch aus mindestens einem quer zu seiner Längsrichtung gewellten metallischen Rohr oder aus einer Kombination von Litzenleiter bzw. Millikenleiter und gewelltem Rohr bestehen.

Für die Abstandshalterung 2 können aus Isoliermaterial, wie beispielsweise ein Polymer, bestehende Scheiben eingesetzt werden, die für das im vom Wellrohr 3 umschlossenen Hohlraum befindliche Gas durchlässig ausgeführt sind. Die Scheiben sind entsprechend der zeichnerischen Darstellung mit axialem Abstand zueinander angeordnet. Die Abstandshalterung 2 kann aber auch aus einer Wendel aus Isoliermaterial bestehen, die um den Leiter 1 herumgewickelt ist.

Das gewellte Metallrohr 3, das bei Einsatz der Leitung in einem Gleichstromnetz als Rückleiter dient, kann vorzugsweise ebenfalls aus Aluminium bzw. einer Aluminiumlegierung oder aus Kupfer bestehen. Es kann in kontinuierlicher Fertigung aus einem längseinlaufenden Metallband hergestellt werden, das zu einem Rohr mit Längsschlitz geformt wird, dessen Längsschlitz danach verschweißt wird und das abschließend derart mit einer quer zu seiner Längsrichtung verlaufenden Wellung versehen wird, daß seine Wellentäler an der Abstandshalterung 2 anliegen.

Über dem gewellten Metallrohr 3 liegt im dargestellten Ausführungsbeispiel eine vorzugsweise aus Isoliermaterial bestehende Pufferschicht 4, über welcher eine Armierung 5 angebracht ist, die von einem Außenmantel 6 aus Isoliermaterial umgeben ist. Der genauere Aufbau der Armierung 5 geht aus Fig. 3 hervor.

Die Armierung 5 ist in erster Linie eine zugfeste Armierung. Sie wirkt aber auch als mechanischer Schutz für das gewellte Metallrohr 3 und gibt der Leitung insgesamt eine verbesserte Druckfestigkeit und ein erhöhtes Gewicht, wodurch ihre Verlegung im Offshore-Bereich vorteilhaft unterstützt wird.

Über dem gewellten Metallrohr 3 befindet sich - wie bereits erwähnt - zunächst eine Pufferschicht 4 aus Isoliermaterial, die als Unterlage für die Armierung 5 dient und das gewellte Metallrohr 3 bei einer Bewegung der Leitung gegen Beschädigungen durch die Armierung schützt. Die Pufferschicht 4 besteht beispielsweise aus Polyethylen. Sie wird mit Vorteil durch Schlauchextrusion erzeugt, so daß ihr Material nicht oder nur unwesentlich in die Wellung des Metallrohres 3 eingreift. Dessen Biegbarkeit wird dann durch die Pufferschicht 4 nicht beeinträchtigt.

Die Pufferschicht 4 ist gemäß Fig. 3 von einer ersten Lage 7 aus zugfesten Fäden umgeben, die parallel zueinander, wendelförmig um dieselbe herumgewickelt sind. Die erste Lage 7 aus zugfesten Fäden ist von einer beispielsweise aus Polyamid bestehenden Trennschicht 8 umgeben, über welcher eine zweite Lage 9 aus zugfesten Fäden angebracht ist, die wieder parallel zueinander wendelförmig um die Trennschicht 8 herumgewickelt sind. Die zweite Lage 9 ist von einer weiteren, ebenfalls vorzugsweise aus Polyamid bestehenden Trennschicht 10 umgeben, über welcher der vorzugsweise aus Polyethylen bestehende Außenmantel 6 angebracht ist, der insbesondere ein Korrosionsschutz für die Leitung ist.

Die Armierung 5 soll mindestens eine Lage aus zugfesten Fäden aufweisen, die in bevorzugter Ausführungsform Stahldrähte sind. Sie können aber auch aus einem anderen zugfesten Material bestehen, wie beispielsweise Aramid, Kohlenstoff oder glasfaserverstärkter Kunststoff. Es können auch mehr als zwei Lagen von zugfesten Fäden in der Armierung 5 vorhanden sein. Die Schlagrichtung der zugfesten Fäden in den einzelnen Lagen kann gleichgerichtet, aber auch entgegengesetzt sein, gegebenenfalls abwechselnd. Die Trennschichten 8 und 10 ermöglichen eine reibungsarme und verschleißfreie Bewegung der einzelnen Schichten der Armierung 5 bei Bewegungen, insbesondere bei Biegungen der Leitung.

Wenn das Wellrohr 3 wendelförmig gewellt ist und die Pufferschicht 4 dessen Wellentäler nicht ausfüllt (Schlauchextrusion), dann kann der vom Außenmantel 6 umschlossene Ringraum zur Überwachung der Unversehrtheit bzw. Funktionsfähigkeit der Leitung eingesetzt werden. Dazu kann der wendelförmige Ringraum dynamisch evakuiert oder mit Druckgas beaufschlagt werden. Das Vakuum wird durch Pumpen ständig aufrechterhalten. Das gilt auch für das unter Druck stehende Gas. Beide Größen werden ständig überwacht.

Wenn es im Falle der Evakuierung zum Druckanstieg kommt und es wird gleichzeitig das im vom Wellrohr 3 umschlossenen Hohlraum befindliche Gas erkannt, dann liegt eine Beschädigung des Wellrohrs 3 vor. Ohne das Gas ist der Außenmantel 6 beschädigt. Analoge Ergebnisse liegen bei der Druckgasüberwachung des Ringraums vor.

## Patentansprüche

1. Hochspannungsleitung, die einen elektrischen Leiter aufweist, um den herum unter Zwischenschaltung einer Abstandshalterung ein Metallrohr angeordnet ist und bei welcher in dem vom Metallrohr umschlossenen, zwischen demselben und dem Leiter befindlichen Hohlraum ein unter Druck stehendes Gas vorhanden ist, **dadurch gekennzeichnet,**
- **daß** das Metallrohr (3) als quer zu seiner Längsrichtung gewelltes Rohr ausgeführt ist und
- **daß** über dem Metallrohr (3) eine in axialer Richtung zugfeste Armierung (5) angebracht ist.

2. Leitung nach Anspruch 1, **dadurch gekennzeichnet, daß** zwischen Armierung (5) und Metallrohr (3) eine aus Isoliermaterial bestehende Pufferschicht (4) angeordnet ist.

3. Leitung nach Anspruch 1 oder 2, **dadurch gekennzeichnet, daß** die Armierung (5) aus zugfesten Fäden, insbesondere aus Stahldrähten, besteht, die in mindestens einer Lage (7,9) um die Pufferschicht (4) herum angeordnet sind.

4. Leitung nach Anspruch 3, **dadurch gekennzeichnet, daß** die zugfesten Fäden einer ersten Lage (7) parallel zueinander verlaufend, wendelförmig um die Pufferschicht (4) herumgewickelt sind.

5. Leitung nach einem der Ansprüche 1 bis 4, **dadurch gekennzeichnet, daß** bei zwei oder mehr Lagen (7,9) von zugfesten Fäden der Armierung (4) jeweils eine aus Kunststoff bestehende Zwischenschicht (8,10) zwischen je zwei Lagen angeordnet ist.

6. Leitung nach einem der Ansprüche 1 bis 5, **dadurch gekennzeichnet, daß** über der Armierung (5) ein aus Kunststoff bestehender Außenmantel (6) angeordnet ist.

7. Leitung nach einem der Ansprüche 1 bis 6, **dadurch gekennzeichnet, daß** der vom Außenmantel (6) umschlossene Ringraum dynamisch evakuiert ist.

8. Leitung nach einem der Ansprüche 1 bis 6, **dadurch gekennzeichnet, daß** der vom Außenmantel (6) umschlossene Ringraum mit Druckgas beaufschlagt ist.
